# EUROPÄISCHE PATENTSCHRIFT

(11) **EP 1 850 096 B1**
(45) Veröffentlichungstag und Bekanntmachung des Hinweises auf die Patenterteilung: **02.08.2017**
(21) Anmeldenummer: 06113002.7
(22) Anmeldetag: 24.04.2006
(51) Int. Cl.: G01D 13/26, G01D 5/14

(54) **Ferngeber für analoge Messgeräte**
Remote transmitter for analogue measuring devices
Teletransmetteur pour appareils de mesure analogiques

(43) Veröffentlichungstag der Anmeldung: 31.10.2007
(73) Patentinhaber: WIKA Alexander Wiegand GmbH & Co.KG, 63911 Klingenberg/Main (DE)
(72) Erfinder: Di Marco, Mirko, 63839 Kleinwallstadt (DE); Klug, Arno, 63820 Elsenfeld (DE); Julien, Hermann, 63911 Klingenberg (DE)
(74) Vertreter: TBK

(56) Entgegenhaltungen:
- EP-A- 0 055 131
- WO-A-2006/043078
- DE-A1- 19 543 562
- US-A- 3 559 062
- US-A- 5 231 508
- US-A1- 2002 144 555
- DORSCH G ET AL: "INCREMENTAL AND ABSOLUTE SHAFT ENCODERS WITH HALL GENERATORS FOR WEIGHING APPLICATIONS" SIEMENS REVIEW, SIEMENS VERLAG, ERLANGEN, DE, Bd. 39, Nr. 4, April 1972 (1972-04), Seiten 173-177, XP008065538 ISSN: 0302-2528

## Beschreibung

Die Erfindung betrifft ein Verfahren für die Umwandlung einer analogen Messanzeige in elektrische Signale gemäß dem Oberbegriff des Anspruchs 1 bzw. einen Ferngeber für analoge Messgeräte gemäß dem Oberbegriff des Anspruchs 10 sowie ein damit ausgerüstetes analoges Messgerät.

Auf dem Gebiet der Temperatur- und Druckmesstechnik ist die Verwendung von anlogen Messgeräten gebräuchlich.

Wenn diese analogen Messgeräte in eine Prozessüberwachung eingebunden werden sollen, so ist die Bereitstellung von elektrischen Signalen notwendig, welche die analoge Anzeige wiedergeben. Dies bedeutet, dass die analoge Anzeige der Messgröße in elektrische Signale umgewandelt werden muss.

Üblich ist beispielsweise die Umwandlung in ein normiertes analoges Ausgangssignal (etwa ein Einheitssignal) in einem Strombereich von 4..20 mA, einem Spannungsbereich von 0,5..3,5 V, oder einem bestimmten Frequenzbereich.

Davon abgesehen bieten auch einige der bekannten Messumwandler digitale Schnittstellen für den direkten Anschluss an digitale Steuerungssysteme.

Allerdings erfolgt bei vielen bekannten Messgeräten mit mechanischer Anzeige und elektrischen Ausgangssignalen der Abgriff über das Messelement. Dabei gestaltet sich der Zusammenbau wie auch die nachfolgende Kalibrierung sehr schwierig.

Zudem ergibt sich für die Umwandlung der analogen Anzeige in ein elektrisches Signal für den Stand der Technik generell das Problem, dass durch Reibung, eine Masse oder die Art der Ankopplung störende Einflüsse auf das elektrische Ausgangssignal ausgeübt werden können.

Die US2002/0144555 A1 offenbart ein Verfahren zum Aufwerten einer Messuhr zur Bereitstellung einer Fernanzeigebefähigung. Genauer wird eine Messuhr, ein Verfahren und ein Bausatz zum Aufwerten einer Messuhr zur Bereitstellung von sowohl einer lokal sichtbaren Anzeige als auch einer Fernanzeige eines gemessenen physikalischen Parameters offenbart. Ein magnetischer Drehzeiger wird zur Kopplung eines Magneten mit einem Zeiger oder durch Bereitstellung eines Ersatzzeigers mit einem integrierten Magneten offenbart, so dass der magnetische Drehzeiger in Reaktion auf die Änderung eines gemessenen physikalischen Parameters drehbar ist. Ein Potentiometer ist mit dem magnetischen Drehzeiger magnetisch gekoppelt, und mit einer Vorderseite der Messuhr befestigt.

Die DE 195 43 562 A1 schlägt eine Anordnung zur berührungslosen Drehwinkelerfassung eines drehbaren Elements vor, bei der unter Auswertung von magnetisch beeinflussbaren Eigenschaften in einer Sensoranordnung, eine vom drehbaren Element erzeugte oder beeinflusste magnetische Feldstärke detektierbar und zur Ermittlung der Drehlage heranziehbar ist. Um auf einfache Weise auch die absolute Drehlage des drehbaren Elements zu erfassen, ist die Sensoranordnung aus wenigstens zwei Sensorelementen aufgebaut und derart dem drehbaren Element gegenüber angeordnet, dass die vom drehbaren Element ausgehenden Feldlinien in jeder Drehlage quer zu den von der Richtung eines Stromes in den Sensorelementen vorgegebenen Sensorstrukturen verlaufen. Mit verschiedenen elektronischen Auswerteinrichtungen sind die Richtungskomponenten der Feldlinien zur Ermittlung der Drehlage (Drehwinkel α) auswertbar, indem die Phasenlage zwischen Eingangs- und Ausgangssignalen der jeweiligen Sensorelemente ausgewertet wird. Als Eingangssignale werden entweder sinus- oder rechteckförmige Wechselspannungen zugeführt oder Gleichspannungen.

Aus der US 3 559 062 A sind ein gattungsgemäßes Verfahren für die Umwandlung einer analogen Messanzeige in elektrische Signale sowie ein gattungsgemäßer Ferngeber für analoge Messgeräte bekannt. Ein Hallsensor ist parallel zu der Drehebene und über der Drehachse eines Zeigers einer analogen Drehanzeige eines Messgerätes vorgesehen. Der Zeiger trägt einen Magneten. Auf einer Sichtscheibe ist eine integrierte Schaltung angebracht. Der Drehwinkels des Magneten wird durch die integrierte Schaltung mit dem Hallsensor gemessen und als elektrisches Signal ausgegeben.

Demzufolge liegt der vorliegenden Erfindung die Aufgabe zu Grunde, ein Verfahren für die Umwandlung einer analogen Messanzeige in elektrische Signale gemäß dem Oberbegriff des Anspruchs 1 bzw. einen Ferngeber für analoge Messgeräte gemäß dem Oberbegriff des Anspruchs 5 so weiterzubilden, dass die Positionierung möglichst einfach ist.

Diese Aufgabe wird erfindungsgemäß durch ein Verfahren für die Umwandlung einer analogen Messanzeige in elektrische Signale mit den Merkmalen des Anspruchs 1 bzw. durch einen Ferngeber für analoge Messgeräte mit den Merkmalen des Anspruchs 5 gelöst. Ein analoges Messgerät mit einem derartigen Ferngeber ist im Patentanspruch 9 definiert. Vorteilhafte Weiterbildungen sind in den abhängigen Ansprüchen definiert.

So wird erfindungsgemäß ein Verfahren für die Umwandlung einer analogen Messanzeige in elektrische Signale bereitgestellt, bei dem der Drehwinkel des Zeigers einer analogen Anzeige berührungslos erfasst und in ein proportionales elektrisches Ausgangssignal gewandelt wird. Dies wird erreicht, indem erfindungsgemäß eine anwendungsspezifische integrierte Schaltung mit einem Hallsensor verwendet wird, der die magnetische Flussdichte parallel zur Oberfläche der integrierten Schaltung erfassen kann.

Ferner wird erfindungsgemäß ein Ferngeber für analoge Messgeräte bereitgestellt.

Unter dem Begriff "Geber" ist vorliegend eine Vorrichtung bezeichnet, die eine umgeformte Messgröße (aus-)gibt. Der Begriff "Ferngeber" deutet dabei lediglich die Eignung zum Herausführen der umgewandelten Messgröße ("in die Ferne") an.

Erfindungsgemäß ist der Ferngeber bzw. die integrierte Schaltung auf einer Sichtscheibe angebracht, die für den Einbau bzw. Anbau an ein Messgerät eingerichtet ist. Dabei sind Anschlüsse zur Energieversorgung und/oder zum Abgriff der bereitgestellten elektrischen Signale durch die Sichtscheibe hindurch nach außen für einen Steckanschluss herausgeführt sein.

Diese Ausgestaltung ermöglicht die Bereitstellung einer von der Endmontage unabhängigen Baugruppe, welche sich für den Einbau bzw. Anbau an standardmäßig hergestellte Zeigermessgeräte eignet.

Das Messgerät kann dabei beispielsweise ein Manometer oder ein Thermometer sein.

Die Ausgänge für die elektrischen Signale können als Spannungs- und/oder Stromausgänge ausgeführt sein. Besonders vorteilhaft ist die Einbindung von standardisierten Bussystemen bzw. Schnittstellen. Die Bussysteme können Lin, Lan, Can oder Profibus umfassen, während die Schnittstellen beispielsweise USB, RS232 oder RS485 umfassen können.

Darüber hinaus wird erfindungsgemäß ein analoges Messgerät mit einem Drehwinkelgeber bereitgestellt, wobei der Drehwinkelgeber nach dem erfindungsgemäßen Ferngeber ausgestaltet ist.

Das erfindungsgemäße Messgerät kann dabei so ausgestaltet sein, dass die anwendungsspezifische integrierte Schaltung innerhalb des Messgerätes angeordnet ist, und Ausgänge zur Bereitstellung von elektrischen Signalen bezüglich einer von Außen einsehbaren Drehwinkelanzeige nach hinten herausgeführt sind.

Den vorstehend beschriebenen Ausgestaltungen der erfindungsgemäßen Lösung ist gemein, dass sie unabhängig von den Positionen der mechanischen und elektrischen Eingänge sowie deren Messgrößen ist. Die erfindungsgemäße Lösung kann besonders vorteilhaft in einer Prozessüberwachung wie beispielsweise bei einer Wasserdruckanzeige oder in einer Heizungsanlage zur Anwendung kommen.

Die Erfindung ist nachstehend anhand von Ausführungsbeispielen unter Bezugnahme auf die beiliegende Zeichnung näher beschrieben. Es zeigen:
Fig. 1 eine Schnittansicht eines Druckmessgeräts mit Rohrfeder und elektrischem Ausgangssignal gemäß einem ersten Ausführungsbeispiel der Erfindung;
Fig. 2 eine Schnittansicht einer Sichtscheibe mit dem erfindungsgemäßen Ferngeber für ein Druckmessgerät gemäß einem zweiten Ausführungsbeispiel der Erfindung; und
Die Figuren 3A und 3B eine Schnittansicht bzw. Draufsicht eines Zeigers mit einem Permanentmagneten für ein Druckmessgerät gemäß dem zweiten Ausführungsbeispiel der Erfindung.

Die nachstehende Beschreibung der bevorzugten Ausführungsbeispiele der Erfindung anhand der beiliegenden Zeichnung soll die Ausführung der Erfindung veranschaulichen und ist nicht dazu gedacht, ein auf die Ausführungsbeispiele beschränktes Verständnis der Erfindung zu vermitteln.

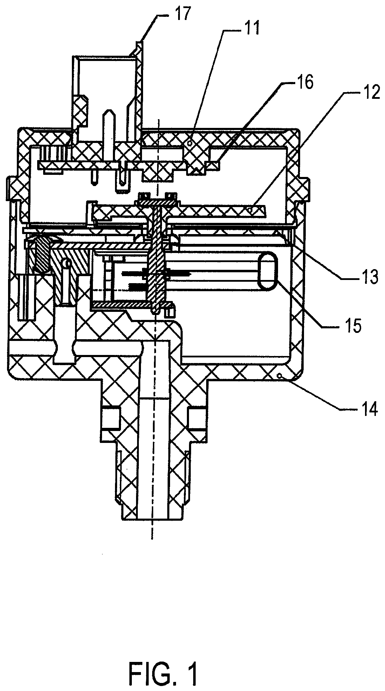

Fig. 1 zeigt eine Schnittansicht eines Druckmessgeräts mit Rohrfeder und elektrischem Ausgangssignal gemäß einem ersten Ausführungsbeispiel der Erfindung.

Das Bezugszeichen 11 bezeichnet dabei die Sichtscheibe des Druckmessgerätes, durch die eine Drehwinkelanzeige 13 unter dem mit dem Bezugszeichen 12 bezeichneten Zeiger in Verbindung mit diesem abgelesen werden kann.

Das Bezugszeichen 14 bezeichnet das Gehäuse des Druckmessgerätes, das eine Rohrfeder 15 als Teil des (mechanischen) Druckmesssystems enthält. Diese Elemente sind zur Veranschaulichung der Ausführung gemäß dem ersten Ausführungsbeispiel der Erfindung gezeigt, können jedoch auch durch im Erfindungssinne gleichwirkende Elemente ersetzt sein.

Das Bezugszeichen 16 bezeichnet eine Leiterplatte, welche die anwendungsspezifische integrierte Schaltung mit dem zur Erfassung einer zu der Oberfläche der integrierten Schaltung parallelen magnetischen Flussdichte eingerichteten Hallsensor als Drehwinkelsensor aufweist.

Wie in Fig. 1 gezeigt ist, ist der Drehwinkelsensor parallel zu der Drehebene des Zeigers 12 und über dessen Drehachse angeordnet.

Außerdem ist die Leiterplatte 16 mit dem Drehwinkelsensor auf der Innenseite der Sichtscheibe 11 angebracht. Nach dem ersten Ausführungsbeispiel sind dabei die elektrischen Anschlüsse der Leiterplatte 16 durch die Sichtscheibe hindurch nach Außen herausgeführt, und mit einem Stecker 17 verbunden.

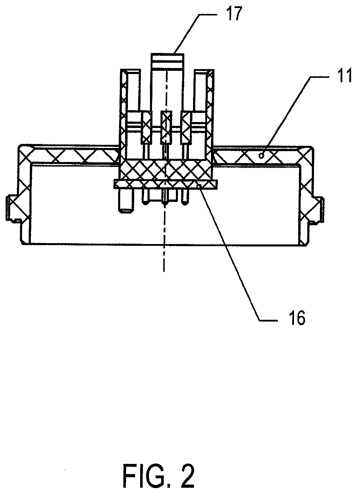

Als besonders bevorzugtes Ausführungsbeispiel der Erfindung zeigt Fig. 2 die Baugruppe der Sichtscheibe nach Fig. 1, wobei eine zu Fig. 1 senkrechte Darstellung gewählt ist. Dabei sind dieselben Bauteile mit denselben Bezugszeichen versehen und nicht noch einmal beschrieben.

Dieses zweite Ausführungsbeispiel der Erfindung zeigt eine von der Endmontage unabhängige Baugruppe mit dem erfindungsgemäßen Ferngeber, welche sich für den Einbau bzw. Anbau an standardmäßig hergestellte Zeigermessgeräte eignet. Ein derartiger Anbau ist in Fig. 1 beispielhaft wiedergegeben.

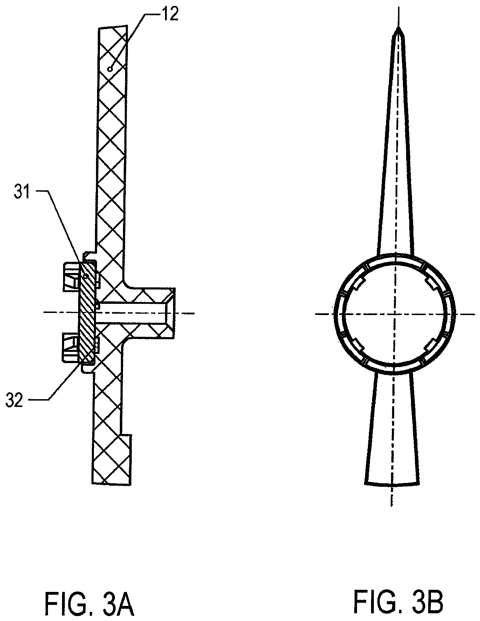

Zu dieser Baugruppe gehört der Zeiger 12, welcher gemäß dem zweiten Ausführungsbeispiel mit einem Permanentmagneten 31 versehen ist, wie dies in den Figuren 3A und 3B gezeigt ist. Der Permanentmagnet 31 kann beispielsweise mit einem Haftmittel 32 an dem Zeiger 12 befestigt sein.

Die strichpunktierten Linien der Figuren 2, 3A und 3B deuten dabei an, dass die anwendungsspezifische integrierte Schaltung mit dem Hallsensor auf der Leiterplatte 16 und der Zeiger 12 mit dem Magneten 31 so eingerichtet sind, dass die anwendungsspezifische integrierte Schaltung mit dem Hallsensor parallel zu der Drehebene und über der Drehachse des Zeigers 12 angeordnet werden kann.

Die vorstehende Beschreibung umfasst somit ein Verfahren für die Umwandlung einer analogen Messanzeige in elektrische Signale, bei dem der Drehwinkel des Zeigers einer analogen Anzeige berührungslos erfasst und in ein proportionales elektrisches Ausgangssignal gewandelt wird. Dies wird erreicht, indem eine anwendungsspezifische integrierte Schaltung mit einem Hallsensor verwendet wird, der die magnetische Flussdichte parallel zur Oberfläche der integrierten Schaltung erfassen kann. Das Verfahren umfasst dabei die Schritte: Positionieren einer anwendungsspezifischen integrierten Schaltung mit einem Hallsensor, der zur Erfassung einer magnetischen Flussdichte parallel zur Oberfläche der integrierten Schaltung eingerichtet ist, mit dem Hallsensor parallel zu der Drehebene und über der Drehachse eines Zeigers der analogen Drehanzeige eines Messgerätes, wobei der Zeiger einen Magneten trägt; Messen des Drehwinkels des Magneten durch die anwendungsspezifische integrierte Schaltung mit dem Hallsensor; und Ausgeben eines elektrischen Signals entsprechend dem Drehwinkel des Magneten.

Während vorstehend bevorzugte Ausführungsbeispiele der Erfindung anhand der beiliegenden Zeichnung beschrieben sind, ist dem Fachmann jedoch klar, dass viele Ausgestaltungen und Abwandlungen der Erfindung erfolgen können, ohne von dem durch die nachstehenden Patentansprüche definierten Erfindungsbereich abzuweichen. Derartige Ausgestaltungen und Abwandlungen sind vielmehr als von der Erfindung umfasst zu verstehen.

## Patentansprüche

1. Verfahren für die Umwandlung einer analogen Messanzeige in elektrische Signale, mit den Schritten:Positionieren einer anwendungsspezifischen integrierten Schaltung mit einem Hallsensor, der zur Erfassung einer magnetischen Flussdichte parallel zur Oberfläche der integrierten Schaltung eingerichtet ist, mit dem Hallsensor parallel zu der Drehebene und über der Drehachse eines Zeigers (12) der analogen Drehanzeige eines Messgerätes, wobei der Zeiger (12) einen Magneten (31) trägt und die integrierte Schaltung auf einer Sichtscheibe (11) angebracht wird, die für den Einbau bzw. Anbau an ein Messgerät eingerichtet ist;Messen des Drehwinkels des Magneten (31) durch die anwendungsspezifische integrierte Schaltung mit dem Hallsensor; und Ausgeben eines elektrischen Signals entsprechend dem Drehwinkel des Magneten, **dadurch gekennzeichnet, dass** Anschlüsse zur Energieversorgung und/oder zum Abgriff des elektrischen Signals durch die Sichtscheibe (11) hindurch nach Außen für einen Steckanschluss (17) herausgeführt sind.

2. Verfahren nach Anspruch 1, wobei die Ausgänge für die elektrischen Signale Spannungs- und/oder Stromausgänge sind.

3. Verfahren nach Anspruch 1, wobei die Anschlüsse an ein standardisiertes Bussystem angepasst sind.

4. Verfahren nach Anspruch 1, wobei die Anschlüsse an eine standardisierte Schnittstelle angepasst sind.

5. Ferngeber für analoge Messgeräte mit:einem Zeiger (12) mit einem Magneten, wobei der Zeiger (12) zur Verwendung in einer analogen Drehanzeige eines Messgerätes eingerichtet ist, **gekennzeichnet durch** eine anwendungsspezifische integrierte Schaltung mit einem Hallsensor, der zur Erfassung einer magnetischen Flussdichte parallel zur Oberfläche der integrierten Schaltung eingerichtet ist,wobei die anwendungsspezifische integrierte Schaltung mit dem Hallsensor und der Zeiger (12) mit dem Magneten (31) so eingerichtet sind, dass die anwendungsspezifische integrierte Schaltung mit dem Hallsensor parallel zu der Drehebene und über der Drehachse des Zeigers (12) angeordnet werden kann, und wobei der Ferngeber auf einer Sichtscheibe (11) angebracht ist, die für den Einbau bzw. Anbau an ein Messgerät eingerichtet ist,**dadurch gekennzeichnet, dass** Anschlüsse zur Energieversorgung und/oder zum Abgriff von elektrischen Signalen durch die Sichtscheibe (11) hindurch nach Außen für einen Steckanschluss (17) herausgeführt sind.

6. Ferngeber nach Anspruch 5, wobei die Ausgänge für die elektrischen Signale als Spannungs- und/oder Stromausgänge ausgeführt sind.

7. Ferngeber nach Anspruch 5, wobei die Anschlüsse an ein standardisiertes Bussystem angepasst sind.

8. Ferngeber nach Anspruch 5, wobei die Anschlüsse an eine standardisierte Schnittstelle angepasst sind.

9. Analoges Messgerät mit einem Drehwinkelgeber, wobei der Drehwinkelgeber ein Ferngeber nach einem der Ansprüche 5 bis 8 ist.

10. Messgerät nach Anspruch 9, wobei die anwendungsspezifische integrierte Schaltung innerhalb des Messgerätes angeordnet ist, und Ausgänge zur Bereitstellung von elektrischen Signalen bezüglich einer von außen einsehbaren Drehwinkelanzeige nach hinten herausgeführt sind.

11. Messgerät nach Anspruch 9 oder 10, wobei das Messgerät ein Manometer oder ein Thermometer ist.

## Claims

1. Method for converting an analogue measurement display into electrical signals, having the steps of:
positioning an application-specific integrated circuit having a Hall sensor, which is arranged parallel to the surface of the integrated circuit in order to detect a magnetic flux density, with the Hall sensor parallel to the rotation plane and above the rotation axis of an indicator (12) of the analogue rotary display of a measurement device, wherein the indicator (12) bears a magnet (31) and the integrated circuit is mounted on a viewing window (11), which is configured for installation on or attachment to a measurement device;
measuring the rotation angle of the magnet (31) by way of the application-specific integrated circuit having the Hall sensor; and outputting an electrical signal corresponding to the rotation angle of the magnet,
**characterized in that** connections for supplying power and/or for tapping the electrical signal are led out through the viewing window (11) to the exterior for a plug connection (17).

2. Method according to Claim 1, wherein the outputs for the electrical signals are voltage and/or current outputs.

3. Method according to Claim 1, wherein the connections are adapted to a standardized bus system.

4. Method according to Claim 1, wherein the connections are adapted to a standardized interface.

5. Remote transmitter for analogue measurement devices, having an indicator (12) having a magnet, wherein the indicator (12) is configured to be used in an analogue rotary display of a measurement device, **characterized by** an application-specific integrated circuit having a Hall sensor, which is arranged parallel to the surface of the integrated circuit in order to detect a magnetic flux density, wherein the application-specific integrated circuit having the Hall sensor and the indicator (12) having the magnet (31) are configured in such a way that the application-specific integrated circuit having the Hall sensor can be arranged parallel to the rotation plane and above the rotation axis of the indicator (12), and wherein the remote transmitter is mounted on a viewing window (11), which is configured for installation on or attachment to a measurement device, **characterized in that** connections for supplying power and/or for tapping electrical signals are led out through the viewing window (11) to the exterior for a plug connection (17).

6. Remote transmitter according to Claim 5, wherein the outputs for the electrical signals are embodied as voltage and/or current outputs.

7. Remote transmitter according to Claim 5, wherein the connections are adapted to a standardized bus system.

8. Remote transmitter according to Claim 5, wherein the connections are adapted to a standardized interface.

9. Analogue measurement device having a rotation angle encoder, wherein the rotation angle encoder is a remote transmitter according to one of Claims 5 to 8.

10. Measurement device according to Claim 9, wherein the application-specific integrated circuit is arranged inside the measurement device and outputs for supplying electrical signals with regard to a rotation angle display that is visible from the exterior are led out to the rear.

11. Measurement device according to Claim 9 or 10, wherein the measurement device is a manometer or a thermometer.

## Revendications

1. Procédé de conversion d'une indication de mesure analogique en signaux de mesure, comprenant les étapes suivantes : positionnement d'un circuit intégré spécifique à l'application pourvu d'un capteur à effet Hall, lequel est conçu pour détecter une densité de flux magnétique parallèle à la surface du circuit intégré, avec le capteur à effet Hall parallèle au plan de rotation et au-dessus de l'axe de rotation d'une aiguille (12) de l'indicateur rotatif d'un appareil de mesure, l'aiguille (12) comportant un aimant (31) et le circuit intégré étant monté sur une vitre d'observation (11) qui est conçue pour être intégrée dans un appareil de mesure ou montée sur celui-ci ; mesure de l'angle de rotation de l'aimant (31) par le circuit intégré spécifique à l'application pourvu du capteur à effet Hall ; et délivrance d'un signal électrique correspondant à l'angle de rotation de l'aimant, **caractérisé en ce que** des bornes destinées à l'alimentation en énergie et/ou au prélèvement du signal électrique sont amenées vers l'extérieur à travers la vitre d'observation (11) pour un raccordement par enfichage (17).

2. Procédé selon la revendication 1, les sorties pour les signaux électriques étant des sorties de tension et/ou de courant.

3. Procédé selon la revendication 1, les bornes étant adaptées à un système de bus normalisé.

4. Procédé selon la revendication 1, les bornes étant adaptées à une interface normalisée.

5. Télétransmetteur pour appareils de mesure analogiques pourvus d'une aiguille (12) comprenant un aimant, l'aiguille (12) étant conçue pour être utilisée dans un indicateur rotatif analogique d'un appareil de mesure, **caractérisé par** un circuit intégré spécifique à l'application pourvu d'un capteur à effet Hall, lequel est conçu pour détecter une densité de flux magnétique parallèle à la surface du circuit intégré, le circuit intégré spécifique à l'application pourvu du capteur à effet Hall et l'aiguille (12) comprenant l'aimant (31) étant conçus de telle sorte que le circuit intégré spécifique à l'application pourvu du capteur à effet Hall peut être disposé en parallèle au plan de rotation et au-dessus de l'axe de rotation de l'aiguille (12), et le télétransmetteur étant monté sur une vitre d'observation (11) qui est conçue pour être intégrée dans un appareil de mesure ou montée sur celui-ci, **caractérisé en ce que** des bornes destinées à l'alimentation en énergie et/ou au prélèvement de signaux électriques sont amenées vers l'extérieur à travers la vitre d'observation (11) pour un raccordement par enfichage (17).

6. Télétransmetteur selon la revendication 5, les sorties pour les signaux électriques étant des sorties de tension et/ou de courant.

7. Télétransmetteur selon la revendication 5, les bornes étant adaptées à un système de bus normalisé.

8. Télétransmetteur selon la revendication 5, les bornes étant adaptées à une interface normalisée.

9. Appareil de mesure analogique comprenant un transmetteur d'angle de rotation, le transmetteur d'angle de rotation étant un télétransmetteur selon l'une des revendications 5 à 8.

10. Appareil de mesure selon la revendication 9, le circuit intégré spécifique à l'application étant disposé à l'intérieur de l'appareil de mesure, et les sorties destinées à mettre à disposition des signaux électriques en rapport avec une indication d'angle de rotation visible depuis l'extérieur étant sorties vers l'arrière.

11. Appareil de mesure selon la revendication 9 ou 10, l'appareil de mesure étant un manomètre ou un thermomètre.
